# EUROPEAN PATENT SPECIFICATION

(11) **EP 2 228 919 B1**
(45) Date of publication and mention of the grant of the patent: **17.02.2016**
(21) Application number: 08869615.8
(22) Date of filing: 02.12.2008
(51) Int. Cl.: H04W 74/00

(54) **RANDOM ACCESS CHANNEL CONSTRUCTING METHOD AND EQUIPMENT FOR WIRELESS COMMUNICATION SYSTEM**
AUFBAUVERFAHREN EINES DIREKTZUGRIFFSKANALS UND EINRICHTUNG FÜR EIN DRAHTLOSES KOMMUNIKATIONSSYSTEM
PROCÉDÉ ET ÉQUIPEMENT DE CONSTRUCTION DE CANAL D'ACCÈS ALÉATOIRE POUR SYSTÈME DE COMMUNICATION SANS FIL

(30) Priority: 10.01.2008 CN 200810001012
(43) Date of publication of application: 15.09.2010
(73) Proprietor: ZTE Corporation, Shenzhen, Guangdong 518057 (CN)
(72) Inventor: HAO, Peng, Guangdong 518057 (CN); XIA, Shuqiang, Guangdong 518057 (CN); DAI, Bo, Guangdong 518057 (CN); LIANG, Chunli, Guangdong 518057 (CN); YU, Bin, Shenzhen Guangdong 518057 (CN)
(74) Representative: Finsterwald, Martin
(86) International application number: PCT/CN2008/073298
(87) International publication number: WO 2009/086762

(56) References cited:
- EP-A1- 2 204 913
- EP-A2- 2 227 923
- CN-A- 1 523 795
- CN-A- 101 217 790
- US-A1- 2007 147 336
- ERICSSON: "E-UTRA Scalability of Random Access Preamble with cyclic prefix", 3GPP DRAFT; R1-062274, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Tallinn; 20060823, 23 August 2006 (2006-08-23), XP050102800, [retrieved on 2006-08-23]
- "3rd Generation Partnership Project; Technical Specification Group Radio Access Network; Evolved Universal Terrestrial Radio Access (E-UTRA); Physical Channels and Modulation (Release 8)", 3GPP STANDARD; 3GPP TS 36.211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.1.0, 1 November 2007 (2007-11-01), pages 1-54, XP050377533,
- MOTOROLA: "E-UTRA TDD Random Access", 3GPP DRAFT; R1-071856_RACH_TDD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, china; 20070417, 17 April 2007 (2007-04-17), XP050111761, [retrieved on 2007-04-17]
- ERICSSON: "RACH for frame structure type 2", 3GPP DRAFT; R1-073737, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20070815, 15 August 2007 (2007-08-15), XP050107326, [retrieved on 2007-08-15]

## Description

### Filed of the Invention

The present invention relates to the field of communication, in particular to a method and an apparatus for constructing a random access channel of a wireless communication system.

### Background of the Invention

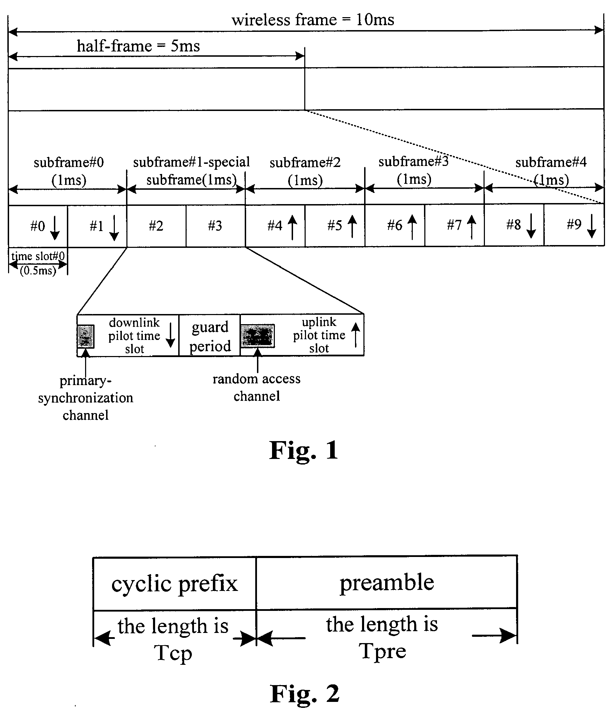

Fig. 1 is a schematic diagram showing a frame structure in the mode of Time Division Duplex (TDD for short) of a Long Term Evolution (LTE for short) system. As shown in Fig. 1, in such a frame structure, one radio frame with a length of 10ms is divided into two half-frames, each half-frame is divided into 10 time slots with a length of 0.5ms (numbered from 0 to 9), two time slots constitute a subframe with a length of 1ms, and one half-frame contains 5 subframes (numbered from 0 to 4). For short Cyclic Prefixes (CP for short) with lengths of 5.21 µs and 4.69 µs, one time slot contains seven symbols with a length of 66.7 µs, wherein the length of the CP of the first symbol is 5.21 µs, and the length of the CPs of the remaining 6 symbols are 4.69 µs; for a long CP with a length of 16.67 µs, one time slot contains six symbols. In addition, in this frame structure, the configuration of the subframe is shown as follows:
Subframe 0 is fixedly used for downlink.
Subframe 1 (hereinafter referred to as a special subframe) contains three special time slots, which are a Downlink Pilot Time Slot (DwPTS for short), a Guard Period (GP for short), and an Uplink Pilot Time Slot (UpPTS for short), respectively. Wherein,
the DwPTS is used for downlink, in which at least one symbol of the DwPTS is used to transmit a Primary-Synchronization Channel (P-SCH for short), when the DwPTS contains a plurality of symbols, the P-SCH is arranged in the first symbol (as shown in Fig. 1);
the GP is a guard time, in which no data is transmitted;
the UpPTS is used for uplink, and is used to transmit a Random Access Channel (RACH for short) signal, a data signal, a sounding pilot signal, etc.

The former n subframes after the subframe 1 are used for an uplink transmission (1≤n≤3), and the latter 3-n subframes are used for a downlink transmission.

The configuration of another half-frame can be the same as the former half-frame, and also can all be downlink subframes, used to transmit downlink data.

Fig. 2 is a schematic diagram showing the random access channel structure. As shown in Fig. 2, the random access channel is composed of a CP (the length thereof is Tcp) and a preamble (the length thereof is Tpre), wherein Tcp ≥ 0 and Tpre > 0. The TDD mode contains two categories of random access channels, wherein the preamble of the first category of the RACH is relatively long, which is 800µs (24576 * Ts, 1Ts = 1/30.72µs) or 1600µs (2 *24576*Ts) and supports a larger coverage; the preamble of the second category of the RACH is relatively short and supports a smaller coverage.

Currently, when the second category of the RACH is transmitted in the UpPTS, the length thereof is limited by the length of the UpPTS, and thus it can not be transmitted flexibly in the UpPTS.

Related technologies are known from the following documents:
"ERICSSON; "E-UTRA Scalability of Random Access Preamble with cyclic prefix", 3GPP DRAFT; R1-062274, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol.RAN WG1, no. Tallinn; 20060823, 23 August 2006 (2006-08-23), XP050102800". This document discloses the features of the preamble of the independent claims.
"3rd Generation Partnership Project; Technical Specification Group Radio Access Network; Evolved Universal Terrestrial Radio Access (E-UTRA); Physical Channels and Modulation (Release 8)", 3GPP standard; 3GPP TS 36.211, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, NO.V8.1.0, 1 November 2007 (2007-11-01), pages 1-54, XP050377533".
"MOTOROLA; "E-UTRA TDD Random Access", 3GPP DRAFT; R1-071856_RACH_TDD, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol.RAN WG1, no. Beijing, china; 20070417, 17 April 2007 (2007-04-17), XP050111761".
"ERICSSON; "RACH for frame structure type 2", 3GPP DRAFT; R1-073737, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol.RAN WG1, no. Athens, Greece; 20070815, 15 August 2007 (2007-08-15), XP050107326".

### Summary of the Invention

The present invention is proposed with respect to the problem that the length of the second category of the RACH is limited by the length of the UpPTS, and thus it can not be transmitted flexibly in the UpPTS. For this reason, the present invention aims at providing an improved solution of constructing a random access channel for a wireless communication system to solve the problem. The present invention is defined in the independent claims.

In order to achieve the above mentioned object, according to one aspect of the present invention, a method for constructing a random access channel of a wireless communication system is provided, comprising the following steps: setting a length of a preamble; setting a length of a CP according to the length of the preamble; and setting a random access channel structure consisting of the preamble and the CP.

Preferably, the length of the preamble is set to be 4096*Ts, and setting the length of the CP according to the length of the preamble specifically comprises: setting the length of the CP to be one of the following values { 0*Ts, 592*Ts, 1184*Ts, 448*Ts, 480*Ts, 464*Ts, 1872*Ts, 1320*Ts, 1328*Ts, 288*Ts, 304*Ts, 1024*Ts, 512*Ts, 1792*Ts, 1240*Ts, 1248*Ts}.

Preferably, the length of the preamble is set to be 6144*Ts, and setting the length of the CP according to the length of the preamble specifically comprises: setting the length of the CP to be one of the following values { 0*Ts, 848*Ts, 296*Ts, 304*Ts, 2128*Ts, 1392*Ts, 1400*Ts, 1696*Ts, 592*Ts, 608*Ts, 1536*Ts, 432*Ts, 448*Ts, 768*Ts, 216*Ts, 224*Ts, 2048*Ts, 1312*Ts, 1320*Ts}.

Preferably, the length of the preamble is set to be 8192*Ts, and setting the length of the CP according to the length of the preamble specifically comprises: setting the length of the CP to be one of the following values { 0*Ts, 1104*Ts, 368*Ts, 376*Ts, 2384*Ts, 1464*Ts, 1472*Ts, 2208*Ts, 736*Ts, 752*Ts, 2048*Ts, 576*Ts, 592*Ts, 1024*Ts, 288*Ts, 296*Ts, 2304*Ts, 1384*Ts, 1392*Ts}.

Preferably, the length of the preamble is set to be 10240*Ts, and setting the length of the CP according to the length of the preamble specifically comprises: setting the length of the CP to be one of the following values { 0*Ts, 1360*Ts, 440*Ts, 448*Ts, 2640*Ts, 1536*Ts, 1544*Ts, 2720*Ts, 880*Ts, 896*Ts, 2560*Ts, 720*Ts, 736*Ts, 1280*Ts, 360*Ts, 368*Ts, 2560*Ts, 1456*Ts, 1464*Ts}.

Preferably, the length of the preamble is set to be 12288*Ts, and setting the length of the CP according to the length of the preamble specifically comprises: setting the length of the CP to be one of the following values { 0*Ts, 1616*Ts, 512*tis, 520*Ts, 336*Ts, 1024*Ts, 1040*Ts, 3232*Ts, 672*Ts, 864*Ts, 880*Ts, 3072*Ts, 512*Ts, 1536*Ts, 432*Ts, 440*Ts, 256*Ts}.

Preferably, the length of the preamble is set to be 14336*Ts, and setting the length of the CP according to the length of the preamble specifically comprises: setting the length of the CP to be one of the following values { 0*Ts, 1872*Ts, 584*Ts, 592*Ts, 3152*Ts, 1680*Ts, 1688*Ts, 3744*Ts, 1168*Ts, 1184*Ts, 3584*Ts, 1008*Ts, 1024*Ts, 1792*Ts, 504*Ts, 512*Ts, 3072*Ts, 1600*Ts, 1608*Ts}.

Preferably, the length of the preamble is set to be 16384*Ts, and setting the length of the CP according to the length of the preamble specifically comprises: setting the length of the CP to be one of the following values { 0*Ts, 2128*Ts, 656*Ts, 664*Ts, 3408*Ts, 1752*Ts, 1760*Ts, 4256*Ts, 1312*Ts, 1328*Ts, 4096*Ts, 1152*Ts, 1168*Ts, 2048*Ts, 576*Ts, 584*Ts, 3328*Ts, 1672*Ts, 1680*Ts}.

Preferably, the length of the preamble is set to be 18432*Ts, and setting the length of the CP according to the length of the preamble specifically comprises: setting the length of the CP to be one of the following values { 0*Ts, 2384*Ts, 728*Ts, 736*Ts, 3664*Ts, 1824*Ts, 1832*Ts, 4768*Ts, 1456*Ts, 1472*Ts, 4608*Ts, 1296*Ts, 1312*Ts, 2304*Ts, 648*Ts, 656*Ts, 3584*Ts, 1744*Ts, 1752*Ts}.

Preferably, the length of the preamble is set to be 20480*Ts, and setting the length of the CP according to the length of the preamble specifically comprises: setting the length of the CP to be one of the following values { 0*Ts, 2640*Ts, 800*Ts, 808*Ts, 3920*Ts, 1896*Ts, 1904*Ts, 5280*Ts, 1600*Ts, 1616*Ts, 5120*Ts, 1440*Ts, 1456*Ts, 2560*Ts, 720*Ts, 728*Ts, 3840*Ts, 1816*Ts, 1824*Ts}.

In order to realize the above mentioned object, according to another aspect of the present invention, an apparatus for constructing a random access channel of a wireless communication system is also provided, comprising: first means, configured to set a length of a preamble; second means, configured to set a length of a CP according to the length of the preamble; and third means, configured to set a random access channel structure consisting of the preamble and the CP.

Preferably, the first means sets the length of the preamble to be 4096*Ts, and the second means sets the length of the CP to be one of the following values { 0*Ts, 592*Ts, 1184*Ts, 448*Ts, 480*Ts, 464*Ts, 1872*Ts, 1320*Ts, 1328*Ts, 288*Ts, 304*Ts, 1024*Ts, 512*Ts, 1792*Ts, 1240*Ts, 1248*Ts}.

Preferably, the first means sets the length of the preamble to be 6144*Ts, and the second means sets the length of the CP to be one of the following values { 0*Ts, 848*Ts, 296*Ts, 304*Ts, 2128*Ts, 1392*Ts, 1400*Ts, 1696*Ts, 592*Ts, 608*Ts, 1536*Ts, 432*Ts, 448*Ts, 768*Ts, 216*Ts, 224*Ts, 2048*Ts, 1312*Ts, 1320*Ts}.

Preferably, the first means sets the length of the preamble to be 8192*Ts, and the second means sets the length of the CP to be one of the following values { 0*Ts, 1104*Ts, 368*Ts, 376*Ts, 2384*Ts, 1464*Ts, 1472*Ts, 2208*Ts, 736*Ts, 752*Ts, 2048*Ts, 576*Ts, 592*Ts, 1024*Ts, 288*Ts, 296*Ts, 2304*Ts, 1384*Ts, 1392*Ts}.

Preferably, the first means sets the length of the preamble to be 10240*Ts, and the second means sets the length of the CP to be one of the following values { 0*Ts, 1360*Ts, 440*Ts, 448*Ts, 2640*Ts, 1536*Ts, 1544*Ts, 2720*Ts, 880*Ts, 896*Ts, 2560*Ts, 720*Ts, 736*Ts}.

Preferably, the first means sets the length of the preamble to be 12288*Ts, and the second means sets the length of the CP to be one of the following values { 0*Ts, 1616*Ts, 512*Ts, 520*Ts, 336*Ts, 1024*Ts, 1040*Ts, 3232*Ts, 672*Ts, 864*Ts, 880*Ts, 3072*Ts, 512*Ts, 720*Ts, 1536*Ts, 432*Ts, 440*Ts, 256*Ts}.

Preferably, the first means sets the length of the preamble to be 14336*Ts, and the second means sets the length of the CP to be one of the following values { 0*Ts, 1872*Ts, 584*Ts, 592*Ts, 3152*Ts, 1680*Ts, 1688*Ts, 3744*Ts, 1168*Ts, 1184*Ts, 3584*Ts, 1008*Ts, 1024*Ts, 1792*Ts, 504*Ts, 512*Ts, 3072*Ts, 1600*Ts, 1608*Ts}.

Preferably, the first means sets the length of the preamble to be 16384*Ts, and the second means sets the length of the CP to be one of the following values { 0*Ts, 2128*Ts, 656*Ts, 664*Ts, 3408*Ts, 1752*Ts, 1760*Ts, 4256*Ts, 1312*Ts, 1328*Ts, 4096*Ts, 1152*Ts, 1168*Ts, 2048*Ts, 576*Ts, 584*Ts, 3328*Ts, 1672*Ts, 1680*Ts}.

Preferably, the first means sets the length of the preamble to be 18432*Ts, and the second means sets the length of the CP to be one of the following values { 0*Ts, 2384*Ts, 728*Ts, 736*Ts, 3664*Ts, 1824*Ts, 1832*Ts, 4768*Ts, 1456*Ts, 1472*Ts, 4608*Ts, 1296*Ts, 1312*Ts, 2304*Ts, 648*Ts, 656*Ts, 3584*Ts, 1744*Ts, 1752*Ts}.

Preferably, the first means sets the length of the preamble to be 20480*Ts, and the second means sets the length of the CP to be one of the following values { 0*Ts, 2640*Ts, 800*Ts, 808*Ts, 3920*Ts, 1896*Ts, 1904*Ts, 5280*Ts, 1600*Ts, 1616*Ts, 5120*Ts, 1440*Ts, 1456*Ts, 2560*Ts, 720*Ts, 728*Ts, 3840*Ts, 1816*Ts, 1824*Ts}.

With the aid of at least one of the above mentioned technical solutions, by reasonably designing the random access channel structure in the present invention, the problem in the prior art that the length of the second category of the RACH is limited by the length of the UpPTS and thus it can not be transmitted flexibly in the UpPTS is overcome, such that the random access channel can be flexibly set to transmit in the UpPTS, and can satisfy the demand of a small coverage scenario in a better manner.

### Brief Description of the Accompanying Drawings

The drawings illustrated herein provide a further understanding of the present invention and form a part of the present application. The exemplary embodiments of the present invention and the description thereof are used to explain the present invention without unduly limiting the scope of the present invention, wherein:
Fig. 1 is a schematic diagram showing a TDD-mode frame structure of a LTE system of the related art;
Fig. 2 is a schematic diagram showing a random access channel structure of the related art;
Fig. 3 is a flow chart showing a method for constructing a random access channel according to an embodiment of the present invention;
Fig. 4 is a block diagram showing an apparatus for constructing a random access channel according to an embodiment of the present invention.

### Detailed Description of the Preferred Embodiments

### Functional summary

In the technical solutions provided in the embodiments of the present invention, by reasonably designing the random access channel structure, the problem in the prior art that the length of the second category of the RACH is limited by the length of the UpPTS and thus it can not be transmitted flexibly in the UpPTS is overcome, such that the random access channel can be flexibly set to transmit in the UpPTS, and can also satisfy the demand of a small coverage scene in a better manner.

The present invention will be described hereinafter in detail with reference to the embodiments in combination with the accompanying drawings. It needs to be explained that, if not contradictory, the embodiments of the present application and the features of the embodiments can be combined with one another.

### Embodiments of the method

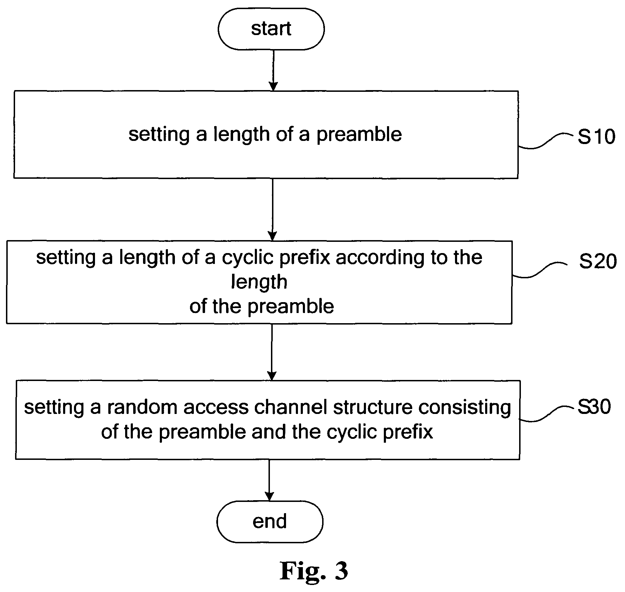

In the embodiments of the present invention, a method for constructing a random access channel is provided. Fig. 3 is a flow chart showing a method for constructing a random access channel according to an embodiment of the present invention. As shown in Fig. 3, the following steps are included (step S10-step S30):
step S10, setting a length of a preamble;
step S20, setting a length of the CP according to the length of the preamble;
step S30, setting a random access channel structure consisting of the preamble and the CP.

Preferably, the length of the preamble is set to be 40496*Ts, and setting the length of the CP according to the length of the preamble specifically comprises: setting the length of the CP to be one of the following values {0*Ts, 592*Ts, 1184*Ts, 448*Ts, 480*Ts, 464*Ts, 1872*Ts, 1320*Ts, 1328*Ts, 288*Ts, 304*Ts, 1024*Ts, 512*Ts, 1792*Ts, 1240*Ts, 1248*Ts}.

Specifically, 1Ts=1/30.72 us, the above mentioned length of the preamble is thus 4096*Ts, viz. 133, 3µs, and the length of the CP may be one of the followings: 0µs, viz. 0*Ts; 19.3µs, viz. 592*Ts; 38.5µs, viz. 1184*Ts; 14.6µs, viz. 448*Ts; 15.6µs, viz. 480*Ts; 15.1µs, viz. 464*Ts; 61µs, viz. 1872*Ts; 43µs, viz. 1320*Ts; 43.2 µs, viz. 1328*Ts; 9.4µs, viz. 288*Ts; 9.9µs, viz. 304*Ts; 33.3µs, viz. 1024*Ts; 16.7µs, viz. 512*Ts; 58.3µs, viz. 1792*Ts; 40.4µs, viz. 1240*Ts, and 40.6µs, viz. 1248*Ts.

Preferably, the length of the preamble is set to be 6144*Ts, and setting the length of the CP according to the length of the preamble specifically comprises: setting the length of the CP to be one of the following values {0*Ts, 848*Ts, 296*Ts, 304*Ts, 2128*Ts, 1392*Ts, 1400*Ts, 1696*Ts, 592*Ts, 608*Ts, 1536*Ts, 432*Ts, 448*Ts}.

Specifically, 1Ts= 1/30.72 µs, the above mentioned length of the preamble is thus 6144*Ts, viz. 200µs, and the length of the CP may be one of the followings: 0µs, viz. 0*Ts; 27.6µs, viz. 848*Ts; 9.6µs, viz. 296*Ts; 9.9µs, viz. 304*Ts; 69.2µs, viz. 2128*Ts; 45.3µs, viz. 1392*Ts; 45.6µs, viz. 1400*Ts; 55.2µs, viz. 1696*Ts; 19.3 µs, viz. 592*Ts; 19.8us, viz. 608*Ts; 50µs, viz. 1536*Ts; 14.1µs, viz. 432*Ts; 14.6µs, viz.448*Ts; 25µs, viz. 768*Ts; 7µs, viz. 216*Ts; 7.3µs, viz. 224*Ts; 66.7µs, viz. 2048*Ts; 42.7µs, viz. 1312*Ts; and 43µs, viz.1320*Ts;

Preferably, the length of the preamble is set to be 8192*Ts, and setting the length of the CP according to the length of the preamble specifically comprises: setting the length of the CP to be one of the following values {0*Ts, 1104*Ts, 368*Ts, 376*Ts, 2384*Ts, 1464*Ts, 1472*Ts, 2208*Ts, 736*Ts, 752*Ts, 2048*Ts, 576*Ts, 592*Ts, 1024*Ts, 288*Ts, 296*Ts, 2304*Ts, 1384*Ts, 1392*Ts}.

Specifically, 1Ts=1/30.72 µs, the above mentioned length of the preamble is thus 8192*Ts, viz. 266.7µs, and the length of the CP may be one of the followings: 0µs, viz. 0*Ts; 35.9µs, viz.1104*Ts; 12µs, viz. 368*Ts; 12.2µs, viz.376*Ts; 77.6µs, viz. 2384*Ts; 47.7µs, viz.1464*Ts; 48µs, viz. 1472*Ts; 71.9µs, viz. 2208*Ts; 24µs, viz. 736*Ts; 24.5µs, viz. 752*Ts; 66.7µs, viz. 2048*Ts; 18.8µs, viz. 576*Ts; 19.3µs, viz. 592*Ts; 33.3µs, viz. 1024*Ts; 9.4µs, viz.288*Ts; 9.6µs, viz. 296*Ts; 72.4µs, viz. 2304*Ts; 45.1µs, viz.1384*Ts; and 45.3µs, viz. 1392*Ts;

Preferably, the length of the preamble is set to be 10240*Ts, and setting the length of the CP according to the length of the preamble specifically comprises: setting the length of the CP to be one of the following values {0*Ts, 1360*Ts, 440*Ts, 448*Ts, 2640*Ts, 1536*Ts, 1544*Ts, 2720*Ts, 880*Ts, 896*Ts, 2560*Ts, 720*Ts, 736*Ts, 1280*Ts, 360*Ts, 368*Ts, 2560*Ts, 1456*Ts, 1464*Ts}.

Specifically, 1Ts=1/30.72 µs, the above mentioned length of the preamble is thus 10240*Ts, viz. 333.3µs, and the length of the CP may be one of the followings: 0µs, viz. 0*Ts; 44.3µs, viz. 1360*Ts; 14.3µs, viz. 440*Ts; 12.2µs, viz.448*Ts; 85.9µs, viz. 2640*Ts; 50µs, viz.1536*Ts; 50.3µs, viz. 1544*Ts; 88.5µs, viz.2720*Ts; 28.6µs, viz. 880*Ts; 29.2µs, viz. 896*Ts; 83.3µs, viz. 2560*Ts; 23.4µs, viz. 720*Ts; 24µs, viz. 736*Ts; 44.3µs, viz.1280*Ts; 14.3µs, viz.360*Ts; 12.2µs, viz. 368*Ts; 85.9µs, viz. 2560*Ts; 50µs, viz.1456*Ts; and 50.3µs, viz. 1464*Ts;

Preferably, the length of the preamble is set to be 12288*Ts, and setting the length of the CP according to the length of the preamble specifically comprises: setting the length of the CP to be one of the following values {0*Ts, 1616*Ts, 512*Ts, 520*Ts, 336*Ts, 1024*Ts, 1040*Ts, 3232*Ts, 672*Ts, 864*Ts, 880*Ts, 3072*Ts, 512*Ts, 1536*Ts, 432*Ts, 440*Ts, 256*Ts}.

Specifically, 1Ts=1/30.72 µs, the above mentioned length of the preamble is thus 12288*Ts, viz. 400µs, and the length of the CP may be one of the followings: 0µs, viz. 0*Ts; 52.6µs, viz. 1616*Ts; 16.7µs, viz. 512*Ts; 16.9µs, viz. 520*Ts; 10.9µs, viz. 336*Ts; 33.3µs, viz.1024*Ts; 33.9µs, viz. 1040*Ts; 105.2µs, viz. 3232*Ts; 21.9µs, viz. 672*Ts; 28.1µs, viz. 864*Ts; 28.6µs, viz. 880*Ts; 100µs, viz. 3072*Ts; 16.7µs, viz. 512*Ts; 50µs, viz.1536*Ts; 14.1µs, viz. 432*Ts; 14.3µs, viz. 440*Ts; and 8.3µs, viz. 256*Ts;

Preferably, the length of the preamble is set to be 14336*Ts, and setting the length of the CP according to the length of the preamble specifically comprises: setting the length of the CP to be one of the following values {0*Ts, 1872*Ts, 584*Ts, 592*Ts, 3152*Ts, 1680*Ts, 1688*Ts, 3744*Ts, 1168*Ts, 1184*Ts, 3584*Ts, 1008*Ts, 1024*Ts, 1792*Ts, 504*Ts, 512*Ts, 3072*Ts, 1600*Ts, 1608*Ts}.

Specifically, 1Ts=1/30.72 µs, the above mentioned length of the preamble is thus 14336*Ts, viz. 466.7µs, and the length of the CP may be one of the followings: 0µs, viz. 0*Ts; 60.9µs, viz. 1872*Ts; 19µs, viz. 584*Ts; 19.3µs, viz. 592*Ts; 102.6µs, viz. 3152*Ts; 54.7 µs, viz. 1680*Ts; 54.9µs, viz. 1688*Ts; 121.9µs, viz. 3744*Ts; 38µs, viz. 1168*Ts; 38.5µs, viz.1184*Ts; 116.7µs, viz. 3584*Ts; 32.8µs, viz. 1008*Ts; 33.3µs, viz. 1024*Ts; 58.3µs, viz.1792*Ts; 16.4µs, viz. 504*Ts; 16.7µs, viz. 512*Ts; and 100µs, viz. 3072*Ts; 52.1µs, viz. 1600*Ts; and 52.3µs, viz. 1608*Ts;

Preferably, the length of the preamble is set to be 16384*Ts, and setting the length of the CP according to the length of the preamble specifically comprises: setting the length of the CP to be one of the following values {0*Ts, 2128*Ts, 656*Ts, 664*Ts, 3408*Ts, 1752*Ts, 1760*Ts, 4256*Ts, 1312*Ts, 1328*Ts, 4096*Ts, 1152*Ts, 1168*Ts, 2048*Ts, 576*Ts, 584*Ts, 3328*Ts, 1672*Ts, 1680*Ts}.

Specifically, 1Ts=1/30.72 µs, the above mentioned length of the preamble is thus 16384*Ts, viz. 533.3µs, and the length of the CP may be one of the followings: 0µs, viz. 0*Ts; 69.3µs, viz. 2128*Ts; 21.4µs, viz. 656*Ts; 21.6µs, viz. 664*Ts; 110.9µs, viz. 3408*Ts; 57µs, viz. 1752*Ts; 57.3µs, viz. 1760*Ts; 138.5µs, viz.4256*Ts; 42.7µs, viz. 1312*Ts; 43.2µs, viz.1328*Ts; 133.3µs, viz. 4096*Ts; 37.5µs, viz. 1152*Ts; 38µs, viz. 1168*Ts; 66.7µs, viz. 2048*Ts; 18.75µs, viz. 576*Ts; 19µs, viz. 584*Ts; and 108.3µs, viz. 3328*Ts; 54.4µs, viz. 1672*Ts; and 54.7µs, viz. 1680*Ts;

Preferably, the length of the preamble is set to be 18432*Ts, and setting the length of the CP according to the length of the preamble specifically comprises: setting the length of the CP to be one of the following values {0*Ts, 2384*Ts, 728*Ts, 736*Ts, 3664*Ts, 1824*Ts, 1832*Ts, 4768*Ts, 1456*Ts, 1472*Ts, 4608*Ts, 1296*Ts, 1312*Ts, 2304*Ts, 648*Ts, 656*Ts, 3584*Ts, 1744*Ts, 1752*Ts}.

Specifically, 1Ts=1/30.72 µs, the above mentioned length of the preamble is thus 18432*Ts, viz. 600µs, and the length of the CP may be one of the followings: 0µs, viz. 0*Ts; 77.6µs, viz. 2384*Ts; 23.7µs, viz. 728*Ts; 24µs, viz. 736*Ts; 119.3µs, viz. 3664*Ts; 59.4µs, viz. 1824*Ts; 59.6µs, viz. 1832*Ts; 155.2µs, viz.4768*Ts; 47.4µs, viz. 1456*Ts; 47.9µs, viz.1472*Ts; 150µs, viz. 4608*Ts; 42.2µs, viz. 1296*Ts; 42.7µs, viz. 1312*Ts; 75µs, viz. 2304*Ts; 21.1µs, viz. 648*Ts; 21.4µs, viz. 656*Ts; and 116.7µs, viz. 3584*Ts; 56.8µs, viz. 1744*Ts; and 57µs, viz. 1752*Ts;

Preferably, the length of the preamble is set to be 20480*Ts, and setting the length of the CP according to the length of the preamble specifically comprises: setting the length of the CP to be one of the following values {0*Ts, 2640*Ts, 800*Ts, 808*Ts, 3920*Ts, 1896*Ts, 1904*Ts, 5280*Ts, 1600*Ts, 1616*Ts, 5120*Ts, 1440*Ts, 1456*Ts, 2560*Ts, 720*Ts, 728*Ts, 3840*Ts, 1816*Ts, 1824*Ts}.

Specifically, 1Ts=1/30.72 µs, the above mentioned length of the preamble is thus 20480*Ts, viz. 666.7µs, and the length of the CP may be one of the followings: 0µs, viz. 0*Ts; 85.9µs, viz. 2640*Ts; 26µs, viz. 800*Ts; 26.3µs, viz. 808*Ts; 127.6µs, viz. 3920*Ts; 61.7µs, viz. 1896*Ts; 62µs, viz. 1904*Ts; 171.9µs, viz.5280*Ts; 52.1µs, viz. 1600*Ts; 52.6µs, viz.1616*Ts; 166.7µs, viz. 5120*Ts; 46.9µs, viz. 1440*Ts; 47.4µs, viz. 1456*Ts; 83.3µs, viz. 2560*Ts; 23.4µs, viz. 720*Ts; 23.7µs, viz. 728*Ts; 125µs, viz. 3840*Ts; 59.1µs, viz. 1816*Ts; and 59.4µs, viz. 1824*Ts;

From the description as mentioned above, it can be determined that the method for constructing the random access channel of the above mentioned embodiment the random access channel structure is reasonably designed such that the problem in the prior art is overcome that the length of the second category of the RACH is limited by the length of the UpPTS and thus it can not be transmitted flexibly in the UpPTS, so as to further allow that the random access channel can be flexibly set to transmit in the UpPTS, and can also satisfy the demand of a small coverage scenario in a better manner.

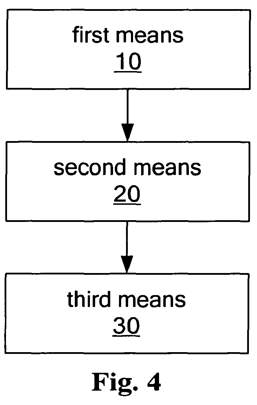

Fig. 4 is a block diagram showing an apparatus for constructing a random access channel according to an embodiment of the present invention. As shown in Fig. 4, said apparatus comprises: first means 10, second means 20, and third means 30, wherein,
the first means 10, configured to set a length of a preamble;
the second means 20, configured to set a length of a CP according to the length of the preamble; and
the third means 30, configured to set a random access channel structure consisting of the preamble and the CP;

Preferably, the first means 10 sets the length of the preamble to be 4096*Ts, and the second means 20 sets the length of the CP to be one of the following values {0*Ts, 592*Ts, 1184*Ts, 448*Ts, 480*Ts, 464*Ts, 1872*Ts, 1320*Ts, 1328*Ts, 288*Ts, 304*Ts, 1024*Ts, 512*Ts, 1792*Ts, 1240*Ts, 1248*Ts}.

Preferably, the first means 10 sets the length of the preamble to be 6144*Ts, and the second means 20 sets the length of the CP to be one of the following values {0*Ts, 848*Ts, 296*Ts, 304*Ts, 2128*Ts, 1392*Ts, 1400*Ts, 1696*Ts, 592*Ts, 608*Ts, 1536*Ts, 432*Ts, 448*Ts, 768*Ts, 216*Ts, 224*Ts, 2048*Ts, 1312*Ts, 1320*Ts}.

Preferably, the first means 10 sets the length of the preamble to be 8192*Ts, and the second means 20 sets the length of the CP to be one of the following values {0*Ts, 1104*Ts, 368*Ts, 376*Ts, 2384*Ts, 1464*Ts, 1472*Ts, 2208*Ts, 736*Ts, 752*Ts, 2048*Ts, 576*Ts, 592*Ts}.

Preferably, the first means 10 sets the length of the preamble to be 10240*Ts, and the second means 20 sets the length of the CP to be one of the following values {0*Ts, 1360*Ts, 440*Ts, 448*Ts, 2640*Ts, 1536*Ts, 1544*Ts, 2720*Ts, 880*Ts, 896*Ts, 2560*Ts, 720*Ts, 736*Ts, 1280*Ts, 360*Ts, 368*Ts, 2560*Ts, 1456*Ts, 1464*Ts}.

Preferably, the first means 10 sets the length of the preamble to be 12288*Ts, and the second means 20 sets the length of the CP to be one of the following values {0*Ts, 1616*Ts, 512*Ts, 520*Ts, 336*Ts, 1024*Ts, 1040*Ts, 3232*Ts, 672*Ts, 864*Ts, 880*Ts, 3072*Ts, 512*Ts, 1536*Ts, 432*Ts, 440*Ts, 256*Ts}.

Preferably, the first means 10 sets the length of the preamble to be 14336*Ts, and the second means sets the length of the CP to be one of the following values {0*Ts, 1872*Ts, 584*Ts, 592*Ts, 3152*Ts, 1680*Ts, 1688*Ts, 3744*Ts, 1168*Ts, 1184*Ts, 3584*Ts, 1008*Ts, 1024*Ts, 1792*Ts, 504*Ts, 512*Ts, 3072*Ts, 1600*Ts, 1608*Ts}.

Preferably, the first means 10 sets the length of the preamble to be 16384*Ts, and the second means 20 sets the length of the CP to be one of the following values {0*Ts, 2128*Ts, 656*Ts, 664*Ts, 3408*Ts, 1752*Ts, 1760*Ts, 4256*Ts, 1312*Ts, 1328*Ts, 4096*Ts, 1152*Ts, 1168*Ts, 2048*Ts, 576*Ts, 584*Ts, 3328*Ts, 1672*Ts, 1680*Ts}.

Preferably, the first means 10 sets the length of the preamble to be 18432*Ts, and the second means 20 sets the length of the CP to be one of the following values {0*Ts, 2384*Ts, 728*Ts, 736*Ts, 3664*Ts, 1824*Ts, 1832*Ts, 4768*Ts, 1456*Ts, 1472*Ts, 4608*Ts, 1296*Ts, 1312*Ts, 2304*Ts, 648*Ts, 656*Ts, 3584*Ts, 1744*Ts, 1752*Ts}.

Preferably, the first means 10 sets the length of the preamble to be 20480*Ts, and the second means 20 sets the length of the CP to be one of the following values {0*Ts, 2640*Ts, 800*Ts, 808*Ts, 3920*Ts, 1896*Ts, 1904*Ts, 5280*Ts, 1600*Ts, 1616*Ts, 5120*Ts, 1440*Ts, 1456*Ts, 2560*Ts, 720*Ts, 728*Ts, 3840*Ts, 1816*Ts, 1824*Ts}.

By reasonably designing the random access channel structure, the apparatus for constructing the random access channel of the above mentioned embodiment overcomes the problem in the prior art that the length of the second category of the RACH is limited by the length of the UpPTS and thus it can not be transmitted flexibly in the UpPTS, such that the random access channel can be flexibly set to transmit in the UpPTS, and can also satisfy the demand of a small coverage scenario in a better manner.

Several more specific embodiments are given hereinafter.

### Example 1

The length of the preamble is set to be 133.3µs, viz. 4096*Ts, and setting the length of the CP to be 14.6µs, viz. 448*Ts.

### Example 2

The length of the preamble is set to be 133.3µs, viz. 4096*Ts, and setting the length of the CP to be 43µs, viz. 1320*Ts.

### Example 3

The length of the preamble is set to be 200µs, viz. 6144*Ts, and setting the length of the CP to be 45.3µs, viz. 1392*Ts.

### Example 4

The length of the preamble is set to be 200µs, viz. 6144*Ts, and setting the length of the CP to be 19.3µs, viz. 592*Ts.

From the above mentioned description, it can be seen that, the second category of the RACH is designed reasonably in the present invention, such that it can be transmitted flexibly in the UpPTS, and also can satisfy the demand of a small coverage scenario of the system.

Obviously, the person skilled in the art would know that, the above mentioned various models or various steps of the present invention can be realized by a general computing device and can concentrate on one single computing device or be distributed over a network composed of a plurality of computing devices. Alternatively, they can be realized by using a program code executed by the computing device. Thus, they can be stored in a storage device to be executed by the computing device or manufactured into integrated circuit modules, respectively, or they can be realized by making a plurality of modules or steps thereof into a single integrated circuit module. In such a way, the present invention is unduly limited by any specific combination of hardware and software.

## Claims

1. A method for constructing a random access channel of a wireless communication system, comprising:
setting a length of a preamble (S10);
setting a length of a cyclic prefix according to the length of the preamble (S20);
setting a random access channel structure consisting of the cyclic prefix and the preamble (S30);
wherein the length of the preamble is set to be 4096*Ts, and setting the length of the cyclic prefix according to the length of the preamble specifically comprises: setting the length of the cyclic prefix to be 448*Ts.

2. An apparatus for constructing a random access channel of a wireless communication system, **characterized by**, comprising:
first means (10), configured to set a length of a preamble;
second means (20), configured to set a length of a cyclic prefix according to the length of the preamble; and
third means (30), configured to set a random access channel structure consisting of the cyclic prefix and the preamble;
wherein the first means (10) set
the length of the preamble to be 4096*Ts, and the second means (20) set the length of the cyclic prefix to be 448*Ts.

## Patentansprüche

1. Verfahren zum Konstruieren eines Kanals eines wahlfreien Zugriffs eines drahtlosen Kommunikationssystems, umfassend:
Festlegen einer Länge einer Präambel (S10);
Festlegen einer Länge eines zyklischen Präfixes gemäß der Länge der Präambel (S20);
Festlegen einer Struktur eines Kanals eines wahlfreien Zugriffs, die aus dem zyklischen Präfix und der Präambel besteht (S30);
wobei die Länge der Präambel auf 4096*Ts festgelegt wird und das Festlegen der Länge des zyklischen Präfixes gemäß der Länge der Präambel im Speziellen umfasst, dass: die Länge des zyklischen Präfixes auf 448*Ts festgelegt wird.

2. Vorrichtung zum Konstruieren eines Kanals eines wahlfreien Zugriffs eines drahtlosen Kommunikationssystems,
**gekennzeichnet durch**:
ein erstes Mittel (10), das ausgestaltet ist, um eine Länge einer Präambel festzulegen;
ein zweites Mittel (20), das ausgestaltet ist, um eine Länge eines zyklischen Präfixes gemäß der Länge der Präambel festzulegen; und
ein drittes Mittel (30), das ausgestaltet ist, um eine Struktur eines Kanals eines wahlfreien Zugriffs, die aus dem zyklischen Präfix und der Präambel besteht, festzulegen;
wobei das erste Mittel (10) die Länge der Präambel auf 4096*Ts festlegt und das zweite Mittel (20) die Länge des zyklischen Präfixes auf 448*Ts festlegt.

## Revendications

1. Procédé de construction d'un canal d'accès aléatoire d'un système de communication sans fil, comprenant :
le réglage d'une longueur d'un préambule (S10) ;
le réglage d'une longueur d'un préfixe cyclique en fonction de la longueur du préambule (S20) ;
le réglage d'une structure de canal d'accès aléatoire constituée du préfixe cyclique et du préambule (S30) ;
dans lequel la longueur du préambule est réglée pour être égale à 4096*Ts, et le réglage de la longueur du préfixe cyclique en fonction de la longueur du préambule comprend spécifiquement : le réglage de la longueur du préfixe cyclique pour être égale à 448*Ts.

2. Appareil pour la construction d'un canal d'accès aléatoire d'un système de communication sans fil, **caractérisé par** le fait de comprendre :
un premier moyen (10), configuré pour régler une longueur d'un préambule ;
un deuxième moyen (20), configuré pour régler une longueur d'un préfixe cyclique en fonction de la longueur du préambule ; et
un troisième moyen (30), configuré pour régler une structure de canal d'accès aléatoire constituée du préfixe cyclique et du préambule ;
dans lequel le premier moyen (10) règle la longueur du préambule pour être égale à 4096*Ts, et le deuxième moyen règle la longueur du préfixe cyclique pour être égale à 448*Ts.
